# EUROPÄISCHE PATENTSCHRIFT

(11) **EP 0 839 691 B1**
(45) Veröffentlichungstag und Bekanntmachung des Hinweises auf die Patenterteilung: **04.10.2001**
(21) Anmeldenummer: 97118525.1
(22) Anmeldetag: 24.10.1997
(51) Int. Cl.: B60R 21/16

(54) **Verfahren zum Falten eines Gassacks für ein Fahrzeuginsassen-Rückhaltesystem, gefalteter Gassack für ein Fahrzeuginsassen-Rückhaltesystem sowie Vorrichtung zur Durchführung des Verfahrens**
Method of folding an airbag for a vehicle passenger, folded airbag and apparatus for carrying out the method
Procédé de pliage d'un coussin gonflable de sécurité pour passager de véhicule, coussin gonflable de sécurité et appareil pour la mise en oeuvre du procédé

(30) Priorität: 28.10.1996 DE 29618772 U; 22.01.1997 DE 19702147
(43) Veröffentlichungstag der Anmeldung: 06.05.1998
(73) Patentinhaber: TRW Occupant Restraint Systems GmbH & Co. KG, 73551 Alfdorf (DE)
(72) Erfinder: Lang, Norbert, 73575 Leinzell (DE); Berger, Jürgen, 73557 Mutlangen (DE); Kuhn, Adolf M., 73642 Welzheim (DE); Aich, Josef, 73540 Heubach/Lautern (DE); Dannenhauer, Reiner, 73642 Welzheim (DE)
(74) Vertreter: Degwert, Hartmut, Dipl.-Phys.

(56) Entgegenhaltungen:
- WO-A-96/34781
- WO-A-97/10123
- WO-A-97/45296
- FR-A- 2 053 900
- GB-A- 2 279 046
- US-A- 5 022 676

## Beschreibung

Die Erfindung betrifft ein Verfahren zum Falten eines Gassacks für ein Fahrzeuginsassen-Rückhaltesystem sowie eine Vorrichtung zur Durchführung des Verfahrens. Ein Rückhaltesystem für einen Fahrzeuginsassen besteht üblicherweise aus einer Druckgasquelle, einer Auslösesensorik für diese sowie einem Gassack, der mit der Druckgasquelle in Strömungsverbindung steht und nach Zünden der Druckgasquelle aus einem platzsparenden, zusammengelegten Zustand in einen entfalteten Zustand überführt werden kann, in welchem er eine Rückhaltewirkung für einen Fahrzeuginsassen bereitstellen kann.

An die Art der Faltung des Gassacks werden eine Reihe von Anforderungen gestellt. Zum einen soll sie ein möglichst schnelles Überführen des Gassacks aus dem zusammengelegten in den entfalteten Zustand ermöglichen. Weiterhin soll die Faltung vorzugsweise automatisch möglich sein. Dies vermindert die Herstellungskosten des Fahrzeuginsassen-Rückhaltesystems.

Aus der WO 97/10123 ist ein Verfahren und eine Vorrichtung zur Faltung eines Gassacks bekannt. Die Vorrichtung enthält einen zwischen zwei parallelen Platten angeordneten Hohlzylinder, dessen Höhe größer ist als sein Durchmesser, über den der Gassack gezogen wird, und ist mit einer Vorrichtung zur Druckbeaufschlagung sowie mehreren Falthilfen, die an den Hohlzylinder anlegbar sind, um die Wandung des Gassacks zwischen der Falthilfe und dem Hohlzylinder festzulegen, versehen. Der Gassack wird zum Falten über den Hohlzylinder gezogen und an einigen Stellen entlang seines Umfangs durch die Falthilfen an diesem Hohlzylinder festgelegt. Anschließend wird der Gassack mit Druck beaufschlagt, so daß er sich zwischen den beiden Platten an den nicht festgelegten Stellen nach außen ausdehnt. Die Falthilfen greifen so am Gassack an, daß Falten entstehen, die parallel zur Einblasöffnung des Gassacks übereinanderliegen. Schließlich wird der Gassack parallel zur Längsachse des Hohlzylinders auf seine Packhöhe zusammengeschoben.

In der WO 97/45296 ist eine Vorrichtung und ein Verfahren zum Falten eines Gassacks beschrieben, bei dem ein ausgebreiteter, leerer Gassack zwischen zwei parallelen Platten angeordnet wird und an einigen Stellen seines Umfangs durch Faltschwerter radial nach innen geschoben wird. Die zwischen den so gebildeten radialen Falten liegenden Abschnitte werden anschließend zusammengeschoben, so daß sich in diesen Zwischenbereichen eine chaotische Faltung ergibt.

WO 97/10123 und WO 97/45296 gehören zum Stand der Technik nach Artikel 54(3) EPÜ.

Durch die Erfindung wird ein Verfahren zum Falten eines Gassacks bereitgestellt, das zum einen automatisch ohne manuelle Schritte ausgeführt werden kann und zum anderen zu einem zusammengefalteten Gassack führt, der in besonders vorteilhafter Weise entfaltet werden kann. Gemäß der Erfindung enthält das erfindungsgemäße Verfahren die folgenden Schritte: Zuerst wird der Gassack auf einer Unterlage ausgebreitet. Dann wird die Berandung der Einblasöffnung des Gassacks fixiert. Anschließend wird parallel zu der Unterlage und in einem Abstand von dieser eine Platte so angeordnet, daß der Gassack zwischen der Unterlage und der Platte liegt. Danach wird der Innenraum des Gassacks mit Druck beaufschlagt, so daß sich der Gassack zwischen der Unterlage und der Platte entfaltet, wobei der Abstand zwischen der Unterlage und der Platte so gewählt ist, daß der zwischen der Unterlage und der Platte entfaltete Gassack eine stark abgeplattete Form hat. Schließlich wird die Wandung des Gassacks an mehreren über seinen Umfang verteilten Stellen nach innen eingedrückt. Auf diese Weise wird ein sehr kompakt zusammengefalteter Gassack erhalten, der dennoch leicht zu entfalten ist. Im Vergleich mit herkömmlichen Faltungsverfahren konnte eine Verbesserung der Entfaltungszeit des Gassacks beobachtet werden. Ferner wurde ein gleichmäßigeres Entfalten des Gassacks sowie ein verbessertes Öffnungsverhalten einer den zusammengefalteten Gassack schützenden Abdeckung beobachtet. Ein mit dem erfindungsgemäßen Verfahren gefalteter Gassack weist eine besonders symmetrische Entfaltung auf, wodurch die Positionierung des Gassacks während des Entfaltens verbessert ist. Durch das besonders gleichmäßige Entfalten des Gassacks werden dessen Nähte und dessen Gewebe geringer als bei Gassäcken belastet, die mit herkömmlichen Verfahren gefaltet sind. Bedingt durch das verbesserte Verhalten beim Entfalten wurde ein Aufprallen von Wandungsteilen des sich entfaltenden Gassacks auf einen zurückzuhaltenden Fahrzeuginsassen nur in deutlich geringerem Maße und mit deutlich geringerer Energie als bei Gassäcken beobachtet, die mit herkömmlichen Verfahren gefaltet sind. Das erfindungsgemäße Verfahren ist sowohl für fahrerseitige Gassäcke, also für im drucklosen Ausgangszustand zweidimensionale Gassäcke, als auch für beifahrerseitige Gassäcke geeignet, die gewöhnlich im drucklosen Ausgangszustand eine dreidimensionale Gestalt aufweisen.

Gemäß einer bevorzugten Ausführungsform der Erfindung ist vorgesehen, daß die Wandung durch mehrere voneinander beabstandete Faltschwerter nach innen eingedrückt wird, die jeweils entlang einer Linie an der Wandung des Gassacks angreifen, so daß zwischen den Faltschwertern liegende Wandungslappen gebildet sind. Faltschwerter stellen ein besonders einfaches Mittel dar, um die Wandung des Gassacks an mehreren voneinander beabstandeten Stellen nach innen einzudrücken, so daß der Gassack kompakt zusammengefaltet wird.

Gemäß einer bevorzugten Ausführungsform der Erfindung ist vorgesehen, daß die Wandung in zwei Schritten nach innen eingedrückt wird, wobei beim zweiten Schritt die Wandungslappen, die beim ersten Schritt gebildet wurden, nach innen gedrückt wird. Auf diese Weise wird ein besonders kompakter gefalteter Gassack erzielt, dessen Wandung dennoch sehr gleichmäßig gefaltet ist.

Gemäß einer bevorzugten Ausführungsform der Erfindung ist weiterhin vorgesehen, daß die Faltschwerter entlang einer Geraden in den Innenraum des Gassacks eingedrückt werden. Auf diese Weise läßt sich das erfindungsgemäße Verfahren besonders einfach ausführen.

Weiterhin kann vorgesehen sein, daß die Faltschwerter beim Eindrücken in den Innenraum des Gassacks parallelverschoben werden. Dieses Verfahren ist insbesondere bei beifahrerseitigen Gassäcken vorteilhaft, da mittels der Parallelverschiebung der Faltschwerter auch ein Gassack, der eine langgestreckte Grundform aufweist, besonders kompakt zusammengefaltet werden kann.

Gemäß einer bevorzugten Ausführungsform der Erfindung ist weiterhin vorgesehen, daß die Wandung des Gassacks entlang von Linien eingedrückt wird, die senkrecht zu der Unterlage und der Platte sind. Auf diese Weise wird gewährleistet, daß sich die Wandung des Gassacks beim Entfalten im wesentlichen ohne Änderung ihrer Ausrichtung lediglich nach außen bewegen muß, damit der Gassack seine vollständig entfaltete Form erreicht.

Gemäß einer bevorzugten Ausführungsform der Erfindung kann vorgesehen sein, daß nach dem Eindrücken der Wandung des Gassacks mittels der Faltschwerter die Wandung durch Faltschieber zum Innenraum des Gassacks hin zusammengeschoben wird. Durch die Kombination von Faltschwertern und Faltschiebern läßt sich das erfindungsgemäße Verfahren mit einem besonders geringen Aufwand durchführen. Die zuerst in die Wandung des Gassacks eingefahrenen Faltschwerter geben das zu erzielende Faltungsmuster grundsätzlich vor. Anstatt jedoch mittels einer Vielzahl von Faltschwertern die gesamte Wandung des Gassacks kompakt zusammenzufalten, kann die Wandung mittels weniger Faltschieber in einfacher Weise kompakt zusammengeschoben werden.

Gemäß einer bevorzugten Ausführungsform der Erfindung kann vorgesehen sein, daß die Wandung mittels vier Faltschiebern zum Innenraum des Gassacks hin geschoben wird, wobei je zwei Faltschieber einander paarweise gegenüberliegen und wobei vier Faltschwerter verwendet werden, die einander paarweise gegenüberliegen. Die Verwendung von vier Faltschwertern und vier Faltschiebern stellt einen guten Kompromiß dar, bei dem einerseits eine reproduzierbare Faltung des Gassacks erhalten wird, während andererseits der Aufwand zur Durchführung des Verfahrens geringgehalten wird.

Gemäß einer bevorzugten Ausführungsform der Erfindung ist vorgesehen, daß der Innenraum des Gassacks, damit sich der Gassack zwischen der Unterlage und der Platte entfaltet, mit einem Überdruck von weniger als 100000 Pa beaufschlagt wird. Dieser Druck ist einerseits ausreichend, um ein vollständiges Entfalten des Gassacks zwischen der Unterlage und der Platte zu gewährleisten, und andererseits nicht so hoch, daß dem Eindringen der Faltschwerter in die Wandung des Gassacks ein übermäßig hoher Widerstand entgegengesetzt wird. Vorzugsweise ist vorgesehen, daß der Innenraum des Gassacks mit einem Druck von etwa 50000 Pa beaufschlagt wird. Dieser Wert hat sich bei Versuchen als ausreichend herausgestellt.

Gemäß einer bevorzugten Ausführungsform der Erfindung kann weiterhin vorgesehen sein, daß das nach der Druckbeaufschlagung im Innenraum des Gassacks enthaltene Gas während des Eindrückens der Faltschwerter bzw. Faltschieber entweichen kann. Auf diese Weise wird die beim Eindrücken der Faltschwerter bzw. Faltschieber in die Wandung des Gassacks aufzuwendende Energie auf einem geringen Wert gehalten.

Weiterhin kann vorgesehen sein, daß nach dem Falten des Gassacks an dessen Innenraum Unterdruck angelegt wird. Auf diese Weise kann der zusammengefaltete Gassack in eine noch kompaktere Form überführt werden, während gleichzeitig gewährleistet wird, daß der gefaltete Gassack, insbesondere nach dem Entfernen der Faltelemente, seine gefaltete Form beibehält, bevor er anderweitig fixiert wird.

Vorzugsweise ist vorgesehen, daß die Unterlage in einem Abstand von der Platte angeordnet wird, der etwa der Packhöhe des zusammengefalteten Gassacks entspricht. Die Packhöhe stellt in diesem Zusammenhang diejenige Höhe dar, die der gefaltete Gassack im Inneren einer für seine Unterbringung vorgesehenen Aufnahme hat. Wenn der Abstand zwischen der Unterlage und der Platte dieser Packhöhe entspricht, kann der mittels der Faltschwerter bzw. Faltschieber zusammengefaltete Gassack direkt in die Aufnahme eingesetzt werden, ohne daß er weiter zusammengefaltet oder umgeformt werden muß.

Die Erfindung betrifft auch eine Vorrichtung zum Falten eines Gassacks, mit einer Unterlage, auf der ein zu faltender Gassack ausgebreitet werden kann, einer Spannvorrichtung, mit der die Berandung der Einblasöffnung fixiert werden kann, einer Platte, die parallel zu der Unterlage und in einem Abstand von dieser angeordnet werden kann, einer Vorrichtung zur Druckbeaufschlagung des Innenraums des mittels der Spannvorrichtung fixierten Gassacks, sowie mehreren Faltschwertern, die zwischen einer von dem Umfang des zwischen der Unterlage und der Platte entfalteten Gassacks beabstandeten Stellung und einer Stellung verschiebbar sind, in der die Wandung des Gassacks zu dessen Innenraum hin eingedrückt ist, wobei der Abstand zwischen der Unterlage und der Platte so gewählt ist, daß der zwischen der Unterlage und der Platte entfaltete Gassack eine stark abgeplattete Form hat. Mit einer solchen Vorrichtung kann ein Gassack in besonders einfacher und vorteilhafter Weise zusammengefaltet werden. Hinsichtlich der Vorteile eines mittels dieser Vorrichtung zusammengefalteten Gassacks wird auf die obigen Erläuterungen verwiesen.

Gemäß einer bevorzugten Ausführungsform der Erfindung ist vorgesehen, daß die Faltschwerter geradlinig verschiebbar sind. Eine geradlinige Verschiebung der Faltschwerter läßt sich konstruktiv auf besonders einfache Weise erzielen.

Gemäß einer bevorzugten Ausführungsform der Erfindung kann vorgesehen sein, daß die Faltschwerter entlang einem Teil ihres Verstellweges parallelverschiebbar sind. Eine Parallelverschiebung der Faltschwerter erfordert zwar einen höheren konstruktiven Aufwand; dieser Aufwand ist jedoch gerechtfertigt, da mittels einer solchen Vorrichtung auch ein beifahrerseitiger Gassack, der im zwischen der Unterlage und der Platte ausgebreiteten Zustand eine langgestreckte Gestalt hat, besonders kompakt zusammengefaltet werden kann.

Weitere Merkmale der Erfindung ergeben sich aus den Unteransprüchen.

Die Erfindung wird nachfolgend unter Bezugnahme auf zwei bevorzugte Ausführungsformen beschrieben, die in den beigefügten Zeichnungen dargestellt sind. In diesen zeigen:
- Fig. 1 in einer schematischen Draufsicht einen fahrerseitigen Gassack und eine erfindungsgemäße Vorrichtung, mit der das erfindungsgemäße Verfahren ausgeführt werden kann, wobei die Vorrichtung in einem Ausgangszustand dargestellt ist;
- Fig. 2 in einer schematischen Seitenansicht den Gassack und die Vorrichtung von Figur 1;
- Fig. 3 in einer schematischen Draufsicht den Gassack und die Vorrichtung von Figur 1, wobei die Vorrichtung in einem Zwischenzustand dargestellt ist;
- Fig. 4 in einer schematischen Draufsicht eine Variante der in den Figuren 1 bis 3 dargestellten Vorrichtung;
- Fig. 5 in einer schematischen perspektivischen Ansicht einen Gassack, der mit einer erfindungsgemäßen Vorrichtung gemäß den Figuren 1 bis 3 zusammengefaltet wurde und an einem Fahrzeuglenkrad angebracht ist;
- Fig. 6 in einer schematischen Draufsicht einen beifahrerseitigen Gassack und eine erfindungsgemäße Vorrichtung, mit der das erfindungsgemäße Verfahren ausgeführt werden kann, wobei die Vorrichtung in einem Ausgangszustand dargestellt ist.
- Fig. 7 in einer schematischen Draufsicht einen Gassack, der mit der erfindungsgemäßen Vorrichtung von Figur 6 unter Verwendung des erfindungsgemäßen Verfahrens zusammengefaltet wurde;
- Fig. 8 in einer schematischen Draufsicht einen beifahrerseitigen Gassack, der dafür vorgesehen ist, mit einem erfindungsgemäßen Verfahren gemäß einer zweiten Ausführungsform zusammengefaltet zu werden;
- Fig. 9 den Gassack von Figur 8 nach einem ersten Faltungsschritt;
- Fig. 10 den Gassack von Figur 9 nach einem weiteren Faltungsschritt;
- Fig. 11 den Gassack von Figur 10 nach dem letzten Faltungsschritt;
- Fig. 12 in einer schematischen perspektivischen Ansicht den Gassack aus den Figuren 8 bis 11, der nach dem Falten an einem Gassack-Modul angebracht ist;
- Fig. 13 in einer schematischen Draufsicht einen beifahrerseitigen Gassack, der dafür vorgesehen ist, mit einem erfindungsgemäßen Verfahren gemäß einer dritten Ausführungsform zusammengefaltet zu werden;
- Fig. 14 den Gassack von Figur 13 nach einem ersten Faltungsschritt;
- Fig. 15 den Gassack von Figur 14 nach einem zweiten Faltungsschritt;
- Fig. 16 den Gassack von Figur 15 nach einem weiteren Faltungsschritt; und
- Fig. 17 den Gassack von Figur 16 nach dem letzten Faltungsschritt.

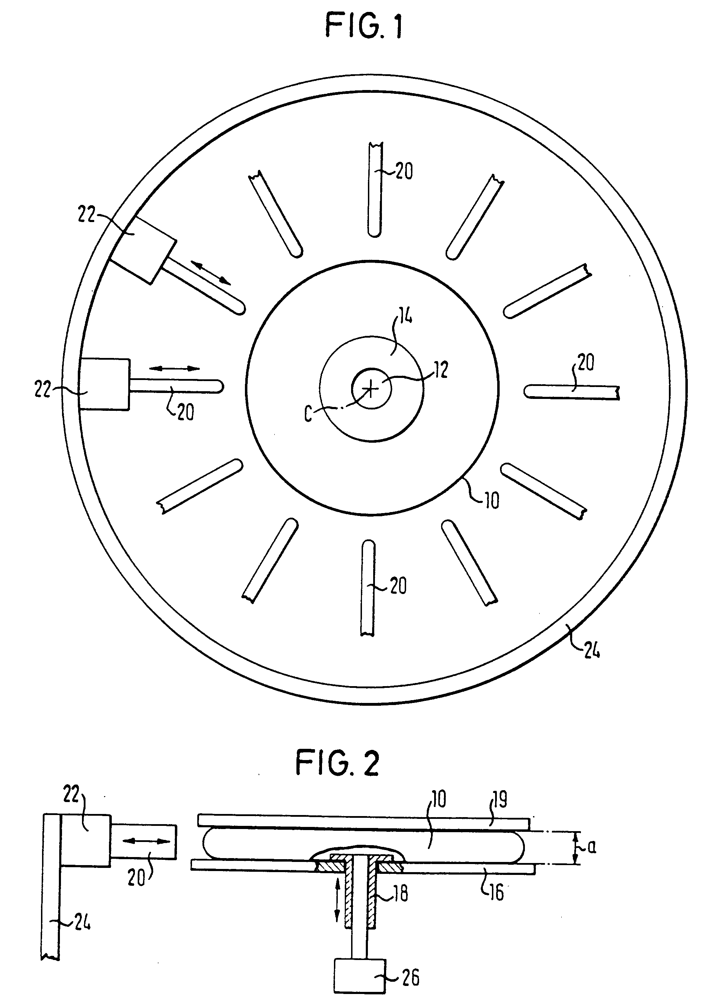

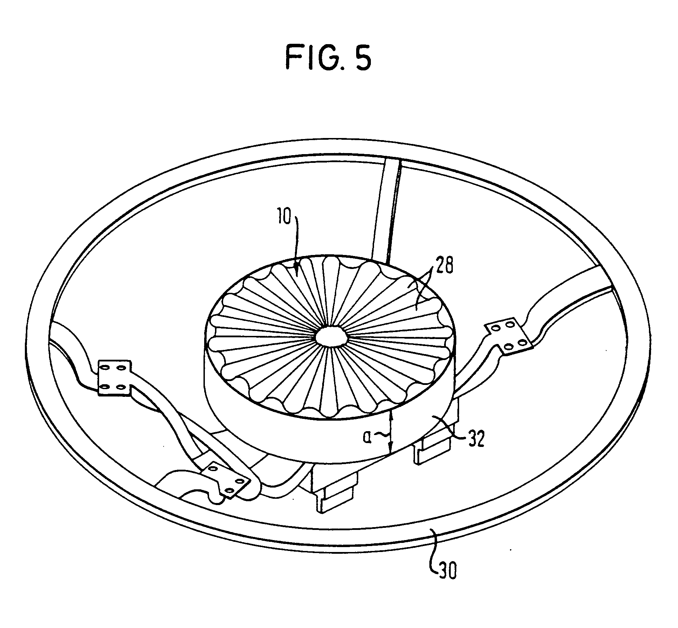

In den Figuren 1 und 2 ist schematisch eine erfindungsgemäße Vorrichtung dargestellt, mittels der unter Verwendung des erfindungsgemäßen Verfahrens ein in diesen Figuren ebenfalls dargestellter Gassack zusammengefaltet werden kann. Ein Beispiel für einen solchen zusammengefalteten Gassack ist in Figur 5 dargestellt. Der dargestellte Gassack 10 ist ein fahrerseitiger Gassack, also ein Gassack, der im drucklosen Ausgangszustand üblicherweise eine flach auszubreitende Gestalt hat. Ein solcher Gassack besteht beispielsweise aus zwei zueinander kongruenten Gewebeteilen und wird als zweidimensionaler Gassack bezeichnet. Der Gassack 10 weist eine Einblasöffnung 12 sowie eine Berandung 14 der Einblasöffnung 12 auf.

Die erfindungsgemäße Vorrichtung enthält eine Unterlage 16, auf der der zu faltende Gassack 10 ausgebreitet werden kann, sowie eine Spannvorrichtung 18, mittels der die Berandung 14 der Einblasöffnung 12 des Gassacks 10 an der Unterlage 16 fixiert werden kann. Die erfindungsgemäße Vorrichtung enthält weiterhin eine Platte 19, die parallel zu der Unterlage 16 und in einem Abstand a (siehe Figur 2) von dieser angeordnet werden kann, so daß sich der zu faltende Gassack zwischen der Unterlage 16 und der Platte 19 befindet.

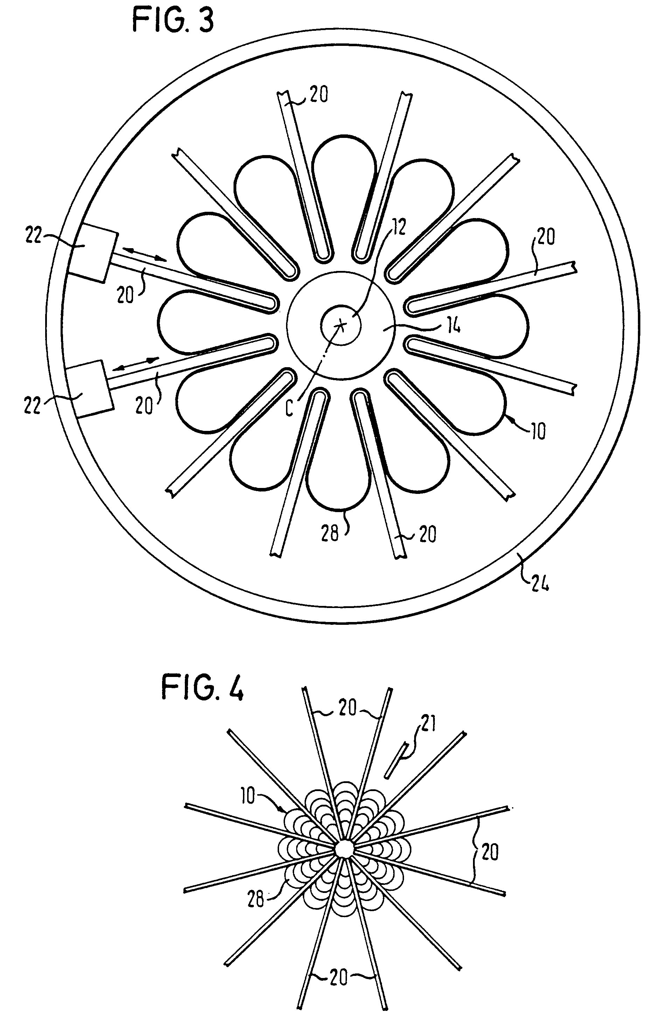

Die erfindungsgemäße Vorrichtung enthält weiterhin mehrere Faltschwerter 20, die um den zu faltenden Gassack herum bezüglich dessen Mitte allgemein radial angeordnet sind und entlang dieser radialen Richtung bewegbar sind. Die Faltschwerter 20 können von jeder geeigneten Antriebsvorrichtung 22 bewegt werden, beispielsweise Hydraulikzylindern oder ähnlichem. Die Antriebsvorrichtung 22 für jedes Faltschwert 20 ist an einem schematisch dargestellten Haltering 24 befestigt. Zur besseren Übersichtlichkeit sind in den Figuren 1 und 3 nur jeweils zwei Antriebsvorrichtungen 22 dargestellt. Ferner wurden in Figur 2 nur das Faltschwert 20 und die Antriebsvorrichtung 22 auf der linken Seite dargestellt. Wie aus Figur 1 zu sehen ist, ist die erfindungsgemäße Vorrichtung symmetrisch aufgebaut. Die erfindungsgemäße Vorrichtung enthält schließlich noch eine Druckbeaufschlagungsvorrichtung 26, mittels der der Innenraum des Gassacks 10 mit einem gewünschten Druck beaufschlagt werden kann.

Das erfindungsgemäße Verfahren wird mit der beschriebenen Vorrichtung in der folgenden Weise ausgeführt: Zuerst wird der Gassack 10 auf der Unterlage 16 angeordnet. Dann wird die Berandung 14 der Einblasöffnung 12 mittels der Spannvorrichtung 18 fixiert. Anschließend wird die Platte 19 in dem vorbestimmten Abstand a von der Unterlage 16 und parallel zu dieser angeordnet. Der Abstand zwischen der Platte 19 und der Unterlage 16 entspricht der für den gefalteten Gassack gewünschten Packhöhe. Danach wird der Gassack 10 mittels der Druckbeaufschlagungsvorrichtung 26 zwischen der Unterlage 16 und der Platte 19 entfaltet. Als geeignete Werte für den Druck zum Entfalten des Gassacks haben sich Werte von weniger als 100000 Pa herausgestellt. Vorzugsweise werden 50000 Pa verwendet. Im entfalteten Zustand hat der Gassack 10 eine stark abgeplattete Gestalt; seine Höhe, gemessen senkrecht auf der von der Einblasöffnung 12 definierten Ebene, ist deutlich kleiner als sein Durchmesser in einer zu dieser Ebene parallelen Richtung.

Anschließend werden die Faltschwerter 20 aus der in den Figuren 1 und 2 gezeigten Stellung, in der sie sich in einem Abstand vom Umfang des entfalteten Gassacks 10 befinden, zur Mitte des Gassacks 10 hin in diesen hineingedrückt. Dies ist in Figur 3 zu sehen. Jedes in den Gassack 10 hineingedrückte Faltschwert 20 bildet eine Einbuchtung, und zwischen jeweils zwei nebeneinanderliegenden Einbuchtungen ist ein Wandungslappen 28 gebildet. Während des Eindrückens der Faltschwerter 20 in den Gassack 10 ermöglicht die Druckbeaufschlagungsvorrichtung 26, daß ein Teil des im Innenraum des Gassacks 10 vorhandenen Volumens verdrängt wird. Dabei kann im Inneren des Gassacks jeder beliebige Druck aufrechterhalten werden, der für das Falten vorteilhaft ist. Es ist jedoch auch möglich, daß während des Zusammenfaltens des Gassacks das in diesem vorhandene Volumen ungehindert entweichen kann.

In den Figuren 1 bis 3 sind Faltschwerter 20 dargestellt, die sich jeweils in einer Ebene erstrecken und in dieser Ebene beweglich sind. Alle Faltschwerter 20 werden auf eine Mittelachse C des Gassacks zubewegt, die senkrecht zur Ebene der Einblasöffnung 12 ist. Weiterhin sind die Faltschwerter 20 senkrecht zur Unterlage 16 und zur Platte 19 angeordnet und haben eine Höhe, die dem Abstand a entspricht. Es sind jedoch auch andere Gestaltungen denkbar. Beispielsweise könnten die Faltschwerter 20 nicht bezüglich der Achse C radial angeordnet sein, sondern schräg verlaufen, so daß sich die gedachte Verlängerung von jeweils zwei Faltschwertern sich bereits vor der Mittellinie C schneiden. Es könnten auch Faltschwerter verwendet werden, deren Erstreckungsebene nicht senkrecht zur Unterlage 16 und zur Platte 19 ist. Ebenso kann die Anzahl der verwendeten Faltschwerter erhöht oder vermindert werden.

In Figur 4 ist eine Variante zu den Figuren 1 bis 3 dargestellt. Der Unterschied besteht darin, daß zwei Gruppen von Faltschwertern vorgesehen sind, nämlich die aus den Figuren 1 bis 3 bekannten Faltschwerter 20 sowie zusätzliche Faltschwerter 21, von denen in Figur 4 zum Zwecke einer besseren Übersichtlichkeit nur ein einziges dargestellt ist. Jedes Faltschwert 21 der zweiten Gruppe ist zwischen zwei benachbarten Faltschwertern 20 der ersten Gruppe angeordnet. Die Faltschwerter 21 werden nach den ersten Faltschwertern 20 in die von diesen beim ersten Faltungsschritt gebildeten Wandungslappen 28 eingedrückt, um den Gassack noch weiter zusammenzufalten. Bei diesem Faltungsschritt wird also jeder Wandungslappen 28, der bei dem ersten Faltungsschritt gebildet ist, in zwei Wandungslappen unterteilt.

Nachdem der Gassack 10 mittels der Faltschwerter 20 bzw. 21 in die gewünschte Form gefaltet wurde, kann an den Innenraum des Gassacks 10 mittels der Druckbeaufschlagungsvorrichtung 26 ein Unterdruck angelegt werden, um den gefalteten Gassack in der erhaltenen Form zu fixieren bzw. ihn noch kompakter zusammenzufalten. In diesem Zustand lassen sich auch die Faltschwerter aus dem Gassack herausziehen, ohne daß sich dessen Form ändert.

In Figur 5 ist ein zusammengefalteter Gassack dargestellt, der mittels der Vorrichtung bzw. dem Verfahren aus den Figuren 1 bis 4 erhalten wurde und an einem schematisch dargestellten Fahrzeuglenkrad 30 angebracht ist. In Figur 5 ist deutlich die kompakte Gestalt des zusammengefalteten Gassacks zu sehen, der ein Paket mit ebener Oberseite sowie ebener Unterseite bildet. Die einzelnen Wandungslappen 28 sind sternförmig um die Mitte des gefalteten Gassacks herum angeordnet. Der gefaltete Gassack hat eine Packhöhe a, die der Höhe einer für den Gassack vorgesehenen Aufnahme entspricht. Zur Fixierung des Gassacks ist um diesen herum eine Banderole 32 vorgesehen.

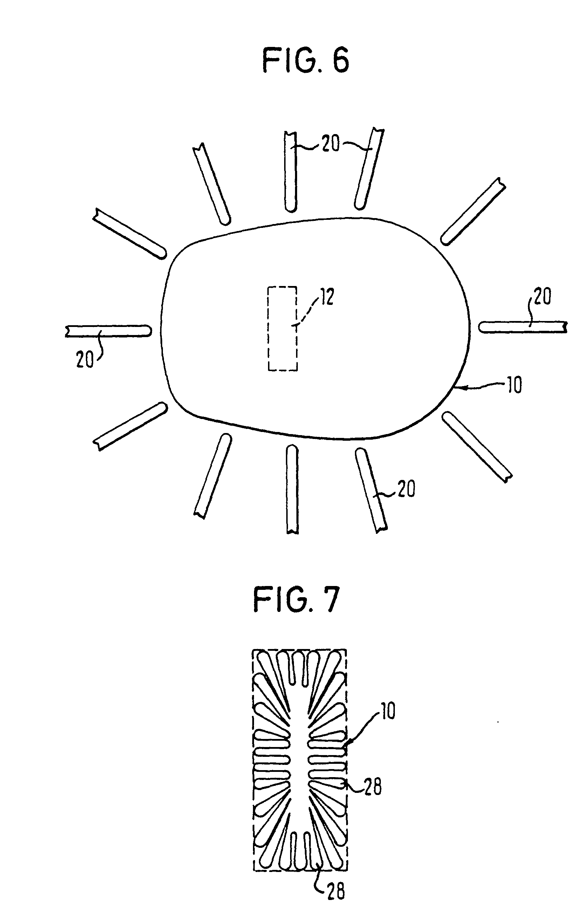

In Figur 6 ist schematisch eine weitere Ausführungsform der Erfindung zu sehen. Im Gegensatz zu den Figuren 1 bis 4, in denen ein fahrerseitiger Gassack dargestellt ist, wird in Figur 6 ein beifahrerseitiger Gassack zusammengefaltet. Dieser Gassack läßt sich im drucklosen Ausgangszustand im allgemeinen nicht flach in einer Ebene ausbreiten, weshalb er als dreidimensionaler Gassack bezeichnet wird. Wie in Figur 6 zu sehen ist, ist die Anordnung der Faltelemente 20 an die Gestalt des Außenumfangs des zwischen der Unterlage 16 und der Platte 19, die in dieser Figur nicht dargestellt sind, aufgeblasenen Gassacks angepaßt; die Faltschwerter 20 sind also entlang einem abgerundeten Rechteck angeordnet. Abgesehen von der anderen Form des in Figur 6 dargestellten Gassacks wird dieser im wesentlichen in gleicher Weise wie der in den Figuren 1 bis 3 dargestellte Gassack gefaltet.

In Figur 7 ist der mittels der Faltschwerter 20 zusammengefaltete Gassack von Figur 6 zu sehen. Da ein Beifahrer-Gassack im allgemeinen in einer langgestreckten Aufnahme untergebracht ist, ist der Gassack auf eine rechteckige Form zusammengefaltet. Auch in diesem Fall verlaufen die gebildeten Wandungslappen annähernd radial bezüglich der Mitte des gefalteten Gassacks.

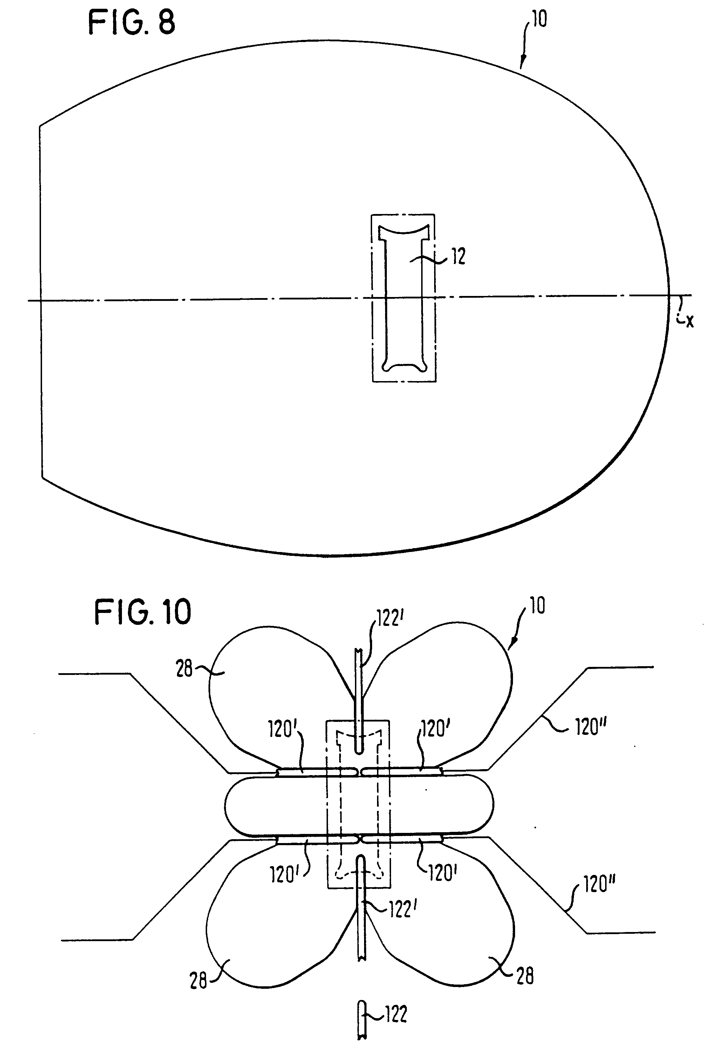

In Figur 8 ist ein beifahrerseitiger Gassack dargestellt, der dafür vorgesehen ist, mit einem erfindungsgemäßen Verfahren gemäß einer weiteren Ausführungsform zusammengefaltet zu werden. Zur besseren Übersichtlichkeit sind hier nur die für das Zusammenfalten verwendeten Faltschwerter dargestellt; die Vorrichtung weist auch bei dieser Ausführungsform die aus den Figuren 1 und 2 bekannten weiteren Bauteile auf, insbesondere die Unterlage und die Platte, zwischen der der Gassack auf seine Packhöhe entfaltet wird. Nach dem Entfalten werden zuerst erste Faltschwerter 120, die parallel zur längeren Längsachse x des Gassacks 10 angeordnet sind, zum Innenraum des Gassacks hin bewegt. Dabei werden die Faltschwerter 120 zuerst geradlinig in der von ihnen definierten Ebene auf den Innenraum des Gassacks 10 zubewegt, anschließend aufeinander zu parallelverschoben und schließlich wieder in der von ihnen definierten Ebene aufeinander zubewegt. In der auf diese Weise erreichten Endstellung sind die Faltschwerter mit dem Bezugszeichen 20' bezeichnet. Mit dem Bezugszeichen 120" ist der von den Faltschwertern 120 zurückgelegte Weg bezeichnet. Zwischen den Faltschwertern 120' sind Wandungslappen 28 gebildet.

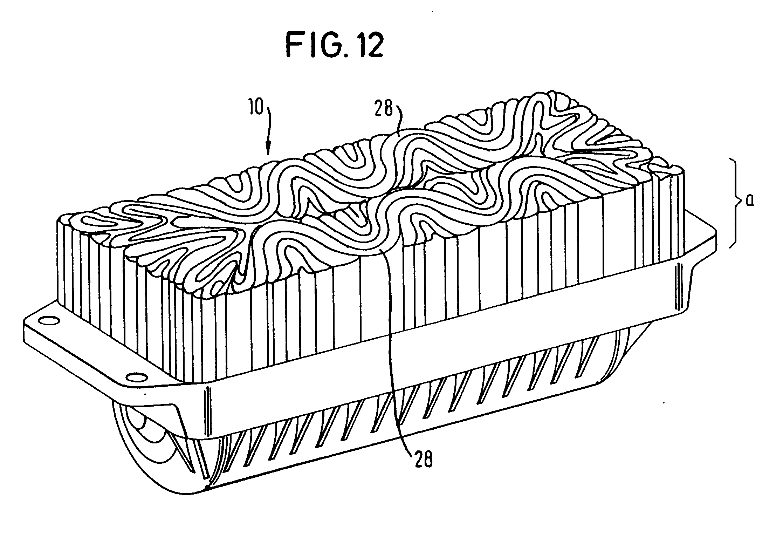

Wie in Figur 11 zu sehen ist, können zusätzlich zu den dargestellten Faltschwertern 20 noch zwei weitere Faltschwerter 121 verwendet werden, die auf der Achse X angeordnet sind und entlang dieser ohne Parallelverschiebung zum Innenraum des Gassacks 10 hin bewegt werden. In der Endstellung sind diese Faltschwerter mit dem Bezugszeichen 121' bezeichnet.

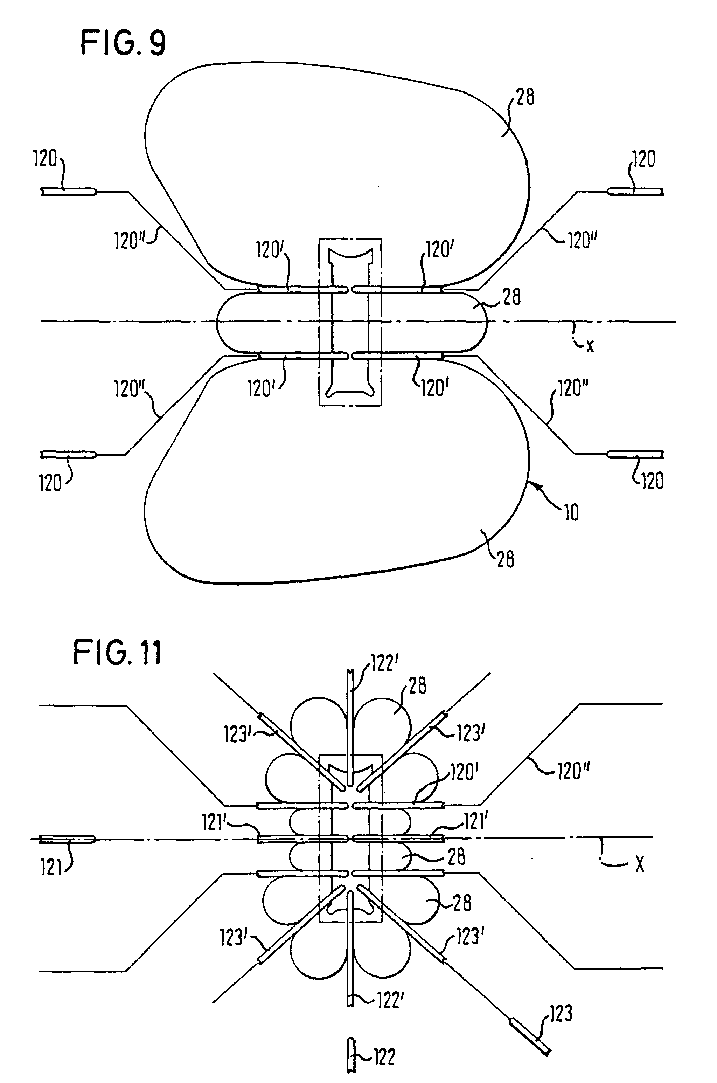

In Figur 10 sind weitere Faltschwerter 122' zu sehen, die sich senkrecht zu den Faltschwertern 121 erstrecken. Diese Faltschwerter 122' wurden in die außenliegenden großen Wandungslappen 28 eingedrückt, die nach dem Faltungsschritt von Figur 9 vorhanden sind. Der in Figur 10 dargestellte Gassack erinnert nach dem Eindrücken der Faltschwerter 122 aufgrund der außenliegenden großen Wandungslappen an ein Kleeblatt.

In Figur 11 ist der letzte Schritt zum Falten des Gassacks 10 dargestellt. Dieser Schritt besteht darin, daß zusätzliche Faltschwerter 123 in die nach dem vorhergehenden Faltungsschritt vorhandenen, außenliegenden Wandungslappen eingedrückt werden. Die Faltschwerter 123 sind bezüglich der Achse x in einem Winkel von jeweils 45° angeordnet.

Die in den Figuren 8 bis 11 dargestellte Ausführungsform der Erfindung besteht also im wesentlichen daraus, den zu faltenden Gassack mittels drei Gruppen von Faltschwertern zusammenzufalten. Verwendet wird eine erste und eine zweite Gruppe, die bei der dargestellten Ausführungsform aus den Faltschwertern 122 und 123 besteht und einander gegenüberliegen, sowie eine dritte Gruppe, die aus den Faltschwertern 120 und 121 besteht und zwischen der ersten und zweiten Gruppe liegt. Wenn es sich als notwendig herausstellt, können für jede dieser Gruppen mehr Faltschwerter als die dargestellten drei bzw. sechs Faltschwerter verwendet werden. Es ergeben sich dann jeweils kleinere Wandungslappen zwischen den einzelnen Faltschwertern.

Nachdem der Gassack 10 auf die gewünschte Form zusammengefaltet ist, wird mittels der Druckbeaufschlagungsvorrichtung an seinen Innenraum ein Unterdruck angelegt. Anschließend können die Faltschwerter aus dem Wandungspaket des Gassacks herausgezogen werden, ohne daß dieses seine Form ändert. Danach kann der zusammengefaltete Gassack entweder direkt in eine für ihn vorgesehen Aufnahme eingesetzt werden oder mit einer Banderole versehen werden, so daß er sich nicht wieder entfaltet.

In Figur 12 ist in einer schematischen perspektivischen Ansicht ein Gassack 10 dargestellt, der mit der in den Figuren 8 bis 11 dargestellten Weise zusammengefaltet wurde. Es ist deutlich zu sehen, daß der gefaltete Gassack eine Höhe a aufweist, die der Packhöhe entspricht und durch den Abstand vorgegeben ist, in dem die Platte 19 von der Unterlage 16 angeordnet wird. Weiterhin ist zu sehen, daß der gefaltete Gassack aus einer Vielzahl von nebeneinanderliegenden Wandungslappen 28 besteht. Diese Wandungslappen verlaufen von außen nach innen sowie im wesentlichen senkrecht zur oberen Seite des gefalteten Gassacks.

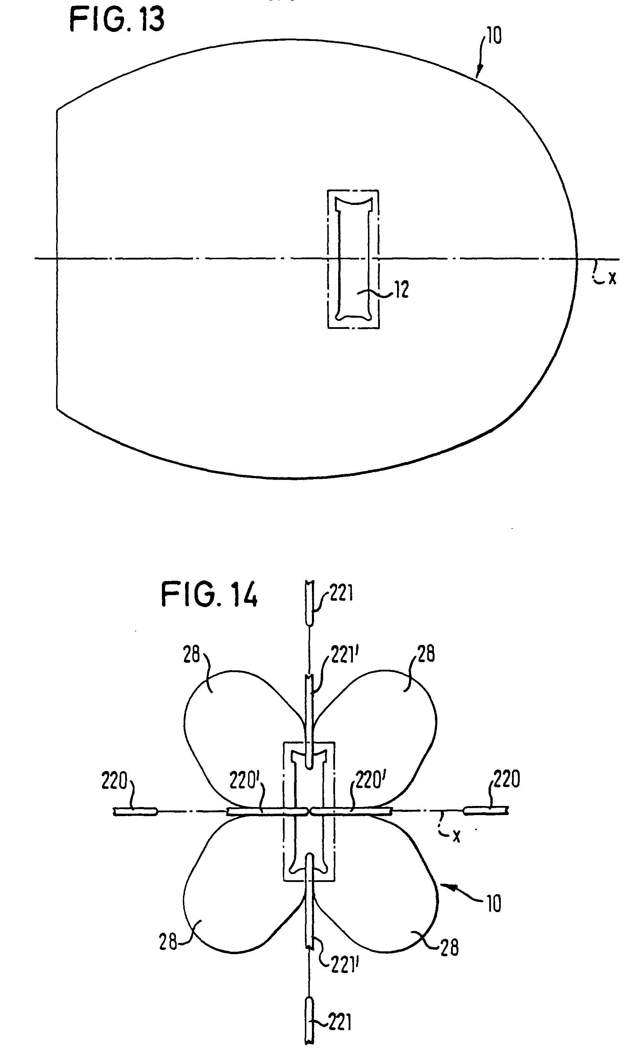

In Figur 13 ist ein beifahrerseitiger Gassack 10 dargestellt, der dafür vorgesehen ist, mit einer weiteren Ausführungsform der Erfindung zusammengefaltet zu werden. Zu diesem Zweck werden Faltschwerter 220 bzw. 221 verwendet, die paarweise einander gegenüberliegend angeordnet sind. Diese Faltschwerter 220 bzw. 221 drücken die Wandung des Gassacks 10, der auch bei dieser Ausführungsform zwischen einer Unterlage und einer Platte der Vorrichtung zum Falten des Gassacks entfaltet ist, an vier voneinander beabstandeten Linien zum Innenraum des Gassacks hin ein. Auf diese Weise werden vier Wandungslappen 28 gebildet, die nach Art eines Kleeblatts angeordnet sind.

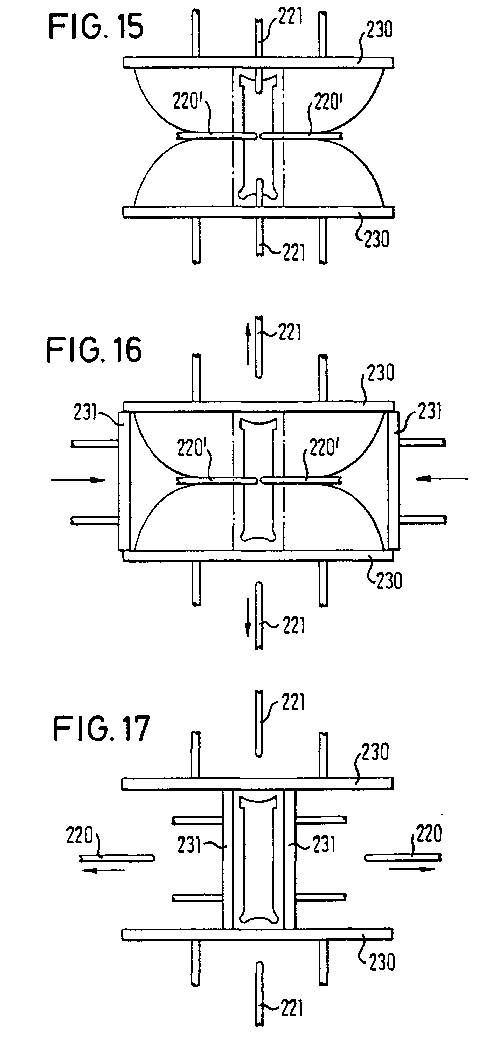

Im nächsten Schritt (Figur 15) werden zwei Faltschieber 230, die parallel zur Achse x verlaufen, senkrecht zu dieser Achse zur Mitte des Gassacks hin bewegt. Anschließend werden die Faltschwerter 221 nach außen herausgezogen (Figur 16).

Im nächsten Schritt werden zwei weitere Faltschieber 231, die sich senkrecht zur Achse x und zu den Faltschiebern 230 erstrecken, von außen zum Innenraum des Gassacks 10 hin zusammengeschoben (Figur 17). Als letzter Schritt werden die Faltschwerter 220, die senkrecht zu den Faltschiebern 231 sind, aus dem gefalteten Gassack herausgezogen. Der Gassack ist somit fertig zusammengefaltet.

Das erfindungsgemäße Verfahren beruht insgesamt auf den beiden folgenden Hauptschritten: Zuerst wird der Gassack zwischen einer Unterlage und einer Platte, die voneinander mit der Höhe des zu erhaltenden gefalteten Gassacks beabstandet sind, entfaltet, und anschließend wird die gesamte Wandung des Gassacks zur Mitte des Gassacks hin zusammengeschoben. Dies kann entweder vollständig mittels Faltschwertern geschehen oder mittels einer Kombination aus Faltschwertern und Faltschiebern. Allen Ausführungsformen des erfindungsgemäßen Verfahrens ist gemeinsam, daß die Wandung des Gassacks nicht in genau definierten ebenen Lagen zusammengefaltet wird, sondern in einer Vielzahl von Wandungslappen zusammengeschoben wird. Diese Wandungslappen sind durch die verwendeten Faltschwerter jeweils genau vorgegeben; innerhalb eines Wandungslappens ist der Verlauf der Wandung jedoch nicht definiert. Es wird bewußt in Kauf genommen, daß das jeweils erhaltene Faltungsmuster des Gassacks sich von Faltung zu Faltung geringfügig unterscheidet. Diese geringfügigen Unterschiede sind jedoch für die Entfaltung des Gassacks ohne Bedeutung; allein durch die von den Faltschwertern vorgegebenen Wandungslappen wird ein jederzeit reproduzierbarer Entfaltungsvorgang erzielt. Für diesen Entfaltungsvorgang sind auch die innerhalb eines Wandungslappens beim Zusammenschieben der Wandung entstehenden Verwerfungen der Wandung des Gassacks ohne Bedeutung.

## Patentansprüche

1. Verfahren zum Falten eines Gassacks (10) für ein Fahrzeuginsassen-Rückhaltesystem mit den folgenden Schritten:
- der Gassack (10) wird auf einer Unterlage (16) ausgebreitet;
- die Berandung (14) der Einblasöffnung (12) des Gassacks (10) wird fixiert;
- parallel zu der Unterlage (16) und in einem Abstand von dieser wird eine Platte (19) so angeordnet, daß der Gassack (10) zwischen der Unterlage (16) und der Platte (19) liegt;
- der Innenraum des Gassacks (10) wird mit Druck beaufschlagt, so daß sich der Gassack (10) zwischen der Unterlage (16) und der Platte (19) entfaltet, wobei der Abstand (a) zwischen der Unterlage (16) und der Platte (19) so gewählt ist, daß der zwischen der Unterlage (16) und der Platte (19) entfaltete Gassack eine stark abgeplattete Form hat;
- die Wandung des Gassacks (10) wird an mehreren über seinen Umfang verteilten Stellen nach innen eingedrückt.

2. Verfahren nach Anspruch 1, **dadurch gekennzeichnet, daß** die Wandung durch mehrere voneinander beabstandete Faltschwerter (20, 21; 120, 121, 122, 123; 220, 221) nach innen eingedrückt wird, die jeweils entlang einer Linie an der Wandung des Gassacks (10) angreifen, so **daß** zwischen den Faltschwertern (20, 21; 120, 121, 122, 123; 220, 221) liegende Wandungslappen (28) gebildet sind.

3. Verfahren nach Anspruch 2, **dadurch gekennzeichnet, daß** die Wandung in zwei Schritten nach innen eingedrückt wird, wobei beim zweiten Schritt die Wandungslappen (28), die beim ersten Schritt gebildet wurden, nach innen gedrückt werden.

4. Verfahren nach Anspruch 3, **dadurch gekennzeichnet, daß** die Faltschwerter (20, 21; 120, 121, 122, 123; 220, 221) entlang einer Geraden in den Innenraum des Gassacks (10) eingedrückt werden.

5. Verfahren nach Anspurch 3 oder Anspruch 4, **dadurch gekennzeichnet, daß** die Faltschwerter (120) beim Eindrücken in den Innenraum des Gassacks (10) parallelverschoben werden.

6. Verfahren nach einem der Ansprüche 2 bis 5, **dadurch gekennzeichnet, daß** die Faltschwerter (20, 21; 220, 221) entlang von Bahnen bewegt werden, die einander in einer einzigen Schnittgerade (C) schneiden.

7. Verfahren nach Anspruch 6, **dadurch gekennzeichnet, daß** die Schnittgerade (C) durch die Mitte des Gassacks (10) verläuft.

8. Verfahren nach Anspruch 6, **dadurch gekennzeichnet, daß** die Schnittgerade (C) durch die Mitte der Einblasöffnung (12) verläuft.

9. Verfahren nach einem der Ansprüche 2 bis 5, **dadurch gekennzeichnet, daß** je zwei nebeneinanderliegende Faltschwerter (20, 21; 122, 123; 220, 221) auf Bahnen bewegt werden, die einander in einer Schnittgeraden schneiden, die durch den Innenraum des Gassacks verläuft.

10. Verfahren nach Anspruch 9, **dadurch gekennzeichnet, daß** die Schnittgerade durch die Einblasöffnung (12) des Gassacks (10) verläuft.

11. Verfahren nach einem der Ansprüche 2 bis 10, **dadurch gekennzeichnet, daß** die Wandung des Gassacks (10) entlang von Linien eingedrückt wird, die senkrecht zu der Unterlage (16) und der Platte (19) sind.

12. Verfahren nach einem Ansprüche 2 bis 11, **dadurch gekennzeichnet, daß** nach dem Eindrücken der Wandung des Gassacks (10) mittels der Faltschwerter (220, 221) die Wandung durch Faltschieber (230, 231) zum Innenraum des Gassacks (10) hin zusammengeschoben wird.

13. Verfahren nach Anspruch 12, **dadurch gekennzeichnet, daß** die Wandung mittels vier Faltschiebern (230, 231) zum Innenraum des Gassacks (10) hin geschoben wird, wobei je zwei Faltschieber (230 bzw. 231) einander paarweise gegenüberliegen und wobei vier Faltschwerter (220, 221) verwendet werden, die einander paarweise gegenüberliegen.

14. Verfahren nach Anspruch 13, **dadurch gekennzeichnet, daß** zuerst zwei einander gegenüberliegende Wandungsteile mittels zwei einander gegenüberliegenden Faltschiebern (230) zum Innenraum des Gassacks (10) hin geschoben werden, wobei die im Bereich dieser Faltschieber (230) liegenden Faltschwerter (221) aus dem Gassack (10) herausgezogen werden, und **daß** anschließend die den verbleibenen Faltschiebern (231) zugeordneten Wandungsteile mittels dieser Faltschieber (231) zum Innenraum des Gassacks (10) hin geschoben werden, wobei die im Bereich dieser Faltschieber (231) liegenden Faltschwerter (220) aus dem Gassack (10) herausgezogen werden.

15. Verfahren nach Anspruch 14, **dadurch gekennzeichnet, daß** nach dem Herausziehen der Faltschwerter (220, 221) aus dem Innenraum des Gassacks (10) dieser mittels der Faltschieber (230, 231) weiter zusammengeschoben wird.

16. Verfahren nach einem der vorhergehenden Ansprüche, **dadurch gekennzeichnet, daß** der Innenraum des Gassacks (10), damit sich der Gassack (10) zwischen der Unterlage (16) und der Platte (19) entfaltet, mit einem Überdruck von weniger als 100000 Pa beaufschlagt wird.

17. Verfahren nach Anspruch 16, **dadurch gekennzeichnet, daß** der Innenraum des Gassacks (10) mit einem Druck von etwa 50000 Pa beaufschlagt wird.

18. Verfahren nach einem Ansprüche 2 bis 17, **dadurch gekennzeichnet, daß** das nach der Druckbeaufschlagung im Innenraum des Gassacks (10) enthaltene Gas während des Eindrückens der Faltschwerter (20, 21; 120, 121, 122, 123; 220, 221) bzw. Faltschieber (230, 231) entweichen kann.

19. Verfahren nach einem der vorhergehenden Ansprüche, **dadurch gekennzeichnet, daß** nach dem Falten des Gassacks (10) an dessen Innenraum Unterdruck angelegt wird.

20. Verfahren nach einem der vorhergehenden Ansprüche, **dadurch gekennzeichnet, daß** der Gassack (10) nach dem Falten in seinem Zustand fixiert wird.

21. Verfahren nach einem der vorhergehenden Ansprüche, **dadurch gekennzeichnet, daß** die Unterlage (16) in einem Abstand (a) von der Platte (19) angeordnet wird, der etwa der Packhöhe des zusammengefalteten Gassacks (10) entspricht.

22. Vorrichtung zum Falten eines Gassacks, mit einer Unterlage (16), auf der ein zu faltender Gassack (10) ausgebreitet werden kann, einer Spannvorrichtung (18), mit der die Berandung (14) der Einblasöffnung (12) fixiert werden kann, einer Platte (19), die parallel zu der Unterlage (16) und in einem Abstand (a) von dieser angeordnet werden kann, einer Vorrichtung (26) zur Druckbeaufschlagung des Innenraums des mittels der Spannvorrichtung (18) fixierten Gassacks (10), sowie mehreren Faltschwertern (20, 21; 120, 121, 122, 123; 220, 221), die zwischen einer von dem Umfang des zwischen der Unterlage (16) und der Platte (19) entfalteten Gassacks (10) beabstandeten Stellung und einer Stellung verschiebbar sind, in der die Wandung des Gassacks (10) zu dessen Innenraum hin eingedrückt ist, wobei der Abstand (a) zwischen der Unterlage (16) und der Platte (19) so gewählt ist, daß der zwischen der Unterlage (16) und der Platte (19) entfaltete Gassack eine stark abgeplattete Form hat.

23. Vorrichtung nach Anspruch 22, **dadurch gekennzeichnet, daß** die Faltschwerter (20, 21; 120, 121, 122, 123; 220, 221) geradlinig verschiebbar sind.

24. Vorrichtung nach Anspruch 22 oder Anspruch 23, **dadurch gekennzeichnet, daß** die Faltschwerter (120) entlang einem Teil ihres Verstellweges parallelverschiebbar sind.

25. Vorrichtung nach einem der Ansprüche 22 bis 24, **dadurch gekennzeichnet, daß** die Faltschwerter (20, 21; 120, 121, 122, 123; 220, 221) gleichmäßig voneinander beabstandet sind.

26. Vorrichtung nach einem der Ansprüche 22 bis 25, **dadurch gekennzeichnet, daß** die Faltschwerter (20, 21) in zwei Gruppen unterteilt sind, wobei jedes Faltschwert (20) einer Gruppe zwischen zwei benachbarten Faltschwertern (21) der anderen Gruppe angeordnet ist.

27. Vorrichtung nach einem der Ansprüche 22 bis 26, **dadurch gekennzeichnet, daß** die Faltschwerter (20, 21) sternförmig angeordnet sind.

28. Vorrichtung nach einem der Ansprüche 22 bis 24, **dadurch gekennzeichnet, daß** die Faltschwerter (120, 121, 122, 123) im zum Innenraum des Gassacks verschobenen Zustand in drei Gruppen angeordnet sind, wobei zwei einander gegenüberliegende Gruppen jeweils mehrere Faltschwerter (122, 123) enthalten, bei denen sich die von ihnen definierten Ebenen in jeweils einer Schnittgeraden schneiden, und wobei eine zwischen den beiden genannten Gruppen liegende Gruppe mehrere Faltschwerter (120, 121) enthält, die zueinander parallel sind.

29. Vorrichtung nach einen der Ansprüche 22 bis 28, **dadurch gekennzeichnet, daß** Faltschieber (230, 231) vorgesehen sind, die mit einer Längsseite an dem Gassack (10) angreifen können und in einer Richtung senkrecht zu dieser Längsseite verschiebbar sind.

30. Vorrichtung nach Anspruch 29, **dadurch gekennzeichnet, daß** vier Faltschieber (230, 231) vorgesehen sind, die einander paarweise gegenüberliegen.

31. Vorrichtung nach einem der Ansprüche 22 bis 30, **dadurch gekennzeichnet, daß** die Vorrichtung (26) zur Druckbeaufschlagung an den Innenraum des Gassacks (10) einen Unterdruck anlegen kann.

32. Vorrichtung nach einem der Ansprüche 22 bis 30, **dadurch gekennzeichnet, daß** die Vorrichtung (26) zur Druckbeaufschlagung an den Innenraum des Gassacks (10) einen Überdruck in der Größenordnung von 50000 bis 100000 Pa anlegen kann.

33. Vorrichtung nach einem der Ansprüche 22 bis 32, **dadurch gekennzeichnet, daß** der Abstand (a) zwischen der Platte (16) und der Unterlage (19) der Packhöhe des zu faltenden Gassacks (10) entspricht.

## Claims

1. A method of folding a gas bag (10) for a vehicle occupant restraint system, comprising the following steps:
- the gas bag (10) is spread out on a base (16);
- the rim (14) of the inflation opening (12) of the gas bag (10) is fixed;
- a plate (19) is arranged parallel to the base (16) and at a distance therefrom, such that the gas bag (10) lies between the base (16) and the plate (19);
- the interior of the gas bag (10) is acted upon by pressure, so that the gas bag (10) unfolds between the base (16) and the plate (19), the distance (a) between the base (16) and the plate (19) being selected such that the gas bag unfolded between the base (16) and the plate (19) has a strongly flattened shape;
- the wall of the gas bag (10) is pressed inwards at several sites distributed over its circumference.

2. The method according to Claim 1, **characterized in that** the wall is pressed inwards by several fold tongues (20, 21; 120, 121, 122, 123; 220, 221) spaced apart from each other, which each engage along a line on the wall of the gas bag (10), so that wall flaps (28) are formed between the fold tongues (20, 21; 120, 121, 122, 123; 220, 221).

3. The method according to Claim 2, **characterized in that** the wall is pressed inwards in two steps, in which in the second step the wall flaps (28), which were formed in the first step, are pressed inwards.

4. The method according to Claim 3, **characterized in that** the fold tongues (20, 21; 120, 121, 122, 123; 220, 221) are pressed into the interior of the gas bag (10) along a straight line.

5. The method according to Claim 3 or Claim 4, **characterized in that** the fold tongues (120) are displaced in a parallel manner on being pressed into the interior of the gas bag (10).

6. The method according to any of Claims 2 to 5, **characterized in that** the fold tongues (20, 21; 220, 221) are moved along paths which intersect each other in a single intersection line (C).

7. The method according to Claim 6, **characterized in that** the intersection line (C) runs through the center of the gas bag (10).

8. The method according to Claim 6, **characterized in that** the intersection line (C) runs through the center of the inflation opening (12).

9. The method according to any of Claims 2 to 5, **characterized in that** every two adjacent fold tongues (20, 21; 122, 123; 220, 221) are moved on paths which intersect each other in an intersection line which runs through the interior of the gas bag.

10. The method according to Claim 9, **characterized in that** the intersection line runs through the inflation opening (12) of the gas bag (10).

11. The method according to any of Claims 2 to 10, **characterized in that** the wall of the gas bag (10) is pressed inwards along lines which are perpendicular to the base (16) and the plate (19).

12. The method according to any of Claims 2 to 11, **characterized in that** after the wall of the gas bag (10) has been pushed inwards by means of the fold tongues (220, 221), the wall is pushed together towards the interior of the gas bag (10) by fold sliders (230, 231).

13. The method according to Claim 12, **characterized in that** the wall is pushed towards the interior of the gas bag (10) by means of four fold sliders (230, 231), every two fold sliders (230 or 231) lying opposite each other in pairs and four fold tongues (220, 221) being used, which lie opposite each other in pairs.

14. The method according to Claim 13, **characterized in that** firstly two wall parts, lying opposite each other, are pushed towards the interior of the gas bag (10) by means of two fold sliders (230) lying opposite each other, the fold tongues (221) lying in the region of these fold sliders (230) being drawn out from the gas bag (10), and **in that** subsequently the wall parts associated with the remaining fold sliders (231) are pushed towards the interior of the gas bag (10) by means of these fold sliders (231), the fold tongues (220) lying in the region of these fold sliders (231) being drawn out from the gas bag (10).

15. The method according to Claim 14, **characterized in that** the gas bag is pushed together further by means of the fold sliders (230, 231) after the fold tongues (220, 221) have been withdrawn from the interior of the gas bag (10).

16. The method according to any of the preceding claims, **characterized in that** the interior of the gas bag (10) is acted upon with an excess pressure of less than 100000 Pa, in order to unfold the gas bag (10) between the base (16) and the plate (19).

17. The method according to Claim 16, **characterized in that** the interior of the gas bag (10) is acted upon with a pressure of approximately 50000 Pa.

18. The method according to any of Claims 2 to 17, **characterized in that** the gas contained in the interior of the gas bag (10) after the application of pressure can escape when the fold tongues (20, 21; 120, 121, 122, 123; 220, 221) or fold sliders (230, 231) are pressed inwardly.

19. The method according to any of the preceding Claims, **characterized in that** a partial vacuum is applied to the interior of the gas bag (10) after folding the gas bag (10).

20. The method according to any of the preceding Claims, **characterized in that** the gas bag (10) is fixed in its state after folding.

21. The method according to any of the preceding Claims, **characterized in that** the base (16) is arranged at a distance (a) from the plate (19) which corresponds to approximately the packing height of the folded gas bag (10).

22. A device for folding a gas bag, comprising a base (16) on which a gas bag (10) to be folded can be spread out, a clamping device (18) by which the rim (14) of the inflation opening (12) can be fixed, a plate (19) which can be arranged parallel to the base (16) and at a distance (a) therefrom, a device (26) for the application of pressure to the interior of the gas bag (10) fixed by means of the clamping device (18), and several fold tongues (20, 21; 120, 121, 122, 123; 220, 221) displaceable between a position at a distance from the periphery of the gas bag (10) which is unfolded between the base (16) and the plate (19), and a position in which the wall of the gas bag (10) is pressed inwards towards its interior, the distance (a) between the base (16) and the plate (19) being selected such that the gas bag which is unfolded between the base (16) and the plate (19) has a strongly flattened shape.

23. The device according to Claim 22, **characterized in that** the fold tongues (20, 21; 120, 121, 122, 123; 220, 221) are displaceable in a straight line.

24. The device according to Claim 22 or Claim 23, **characterized in that** the fold tongues (120) are displaceable in a parallel manner along a portion of their displacement length.

25. The device according to any of Claims 22 to 24, **characterized in that** the fold tongues (20, 21; 120, 121, 122, 123; 220, 221) are spaced apart from each other in a uniform manner.

26. The device according to any of Claims 22 to 25, **characterized in that** the fold tongues (20, 21) are divided into two groups, each fold tongue (20) of one group being arranged between two adjacent fold tongues (21) of the other group.

27. The device according to any of Claims 22 to 26, **characterized in that** the fold tongues (20, 21) are arranged in a star shape.

28. The device according to any of Claims 22 to 24, **characterized in that** the fold tongues (120, 121, 122, 123) in the state displaced towards the interior of the gas bag are arranged in three groups, two groups lying opposite each other each containing several fold tongues (122, 123), in which the planes defined by them intersect each other in one intersection line each, and a group lying between the two said groups containing several fold tongues (120, 121) which are parallel to each other.

29. The device according to any of Claims 22 to 28, **characterized in that** fold sliders (230, 231) are provided, which can engage with a longitudinal side on the gas bag (10) and are displaceable in a direction perpendicular to this longitudinal side.

30. The device according to Claim 29, **characterized in that** four fold sliders (230, 231) are provided, which lie opposite each other in pairs.

31. The device according to any of Claims 22 to 30, **characterized in that** the device (26) for the application of pressure can apply a partial vacuum to the interior of the gas bag (10).

32. The device according to any of Claims 22 to 30, **characterized in that** the device (26) for the application of pressure can apply an excess pressure in the order of 50000 to 100000 Pa to the interior of the gas bag (10).

33. The device according to any of Claims 22 to 32, **characterized in that** the distance (a) between the plate (16) and the base (19) corresponds to the packing height of the gas bag (10) which is to be folded.

## Revendications

1. Procédé pour plier un coussin à gaz (10) pour un système de retenue des occupants d'un véhicule, comprenant les étapes suivantes:
- le coussin à gaz (10) est étalé sur une base (16);
- le bord (14) de l'orifice de gonflage (12) du coussin à gaz (10) est fixé;
- parallèlement à la base (16) et à une certaine distance de celle-ci est disposée une plaque (19), de telle sorte que le coussin à gaz (10) se trouve entre la base (16) et la plaque (19);
- la cavité intérieure du coussin à gaz (10) est mise sous pression, de sorte que le coussin à gaz (10) se déploie entre la base (16) et la plaque (19), la distance (a) entre la base (16) et la plaque (19) étant choisie de telle sorte que le sac à gaz déployé entre la base (16) et la plaque (19) ait une forme fortement aplatie;
- la paroi du coussin à gaz (10) est repoussée vers l'intérieur en plusieurs endroits répartis sur son périmètre.

2. Procédé selon la revendication 1, **caractérisé en ce que** la paroi est repoussée vers l'intérieur par plusieurs lames de pliage (20, 21; 120, 121, 122, 123; 220, 221) qui sont distantes les unes des autres et qui agissent chacune le long d'une ligne située au niveau de la paroi du coussin à gaz (10), ce qui a pour effet de former des lobes de paroi (28) situés entre les lames de pliage (20, 21; 120, 121, 122, 123; 220, 221).

3. Procédé selon la revendication 2, **caractérisé en ce que** la paroi est repoussée vers l'intérieur en deux étapes, les lobes de paroi (28) formés lors de la première étape étant poussés vers l'intérieur lors de la seconde étape.

4. Procédé selon la revendication 3, **caractérisé en ce que** les lames de pliage (20, 21, 120, 121, 122, 123; 220, 221) sont repoussées dans la cavité intérieure du coussin à gaz (10) suivant une droite.

5. Procédé selon la revendication 3 ou la revendication 4, **caractérisé en ce que** les lames de pliage (120) sont déplacées parallèlement lors de leur poussée dans la cavité intérieure du coussin à gaz (10).

6. Procédé selon l'une des revendications 2 à 5, **caractérisé en ce que** les lames de pliage (20, 21; 220, 221) sont déplacées le long de trajets qui se rencontrent sur une droite d'intersection unique (C).

7. Procédé selon la revendication 6, **caractérisé en ce que** la droite d'intersection (C) passe par le centre du coussin à gaz (10),

8. Procédé selon la revendication 6, **caractérisé en ce que** la droite d'intersection (C) passe par le centre de l'orifice de gonflage (12).

9. Procédé selon l'une des revendications 2 à 5, **caractérisé en ce que** chaque paire de lames de pliage juxtaposées (20, 21; 122, 123; 220, 221) est déplacée sur des trajets qui se rencontrent sur une droite d'intersection qui traverse la cavité intérieure du coussin à gaz.

10. Procédé selon la revendication 9, **caractérisé en ce que** la droite d'intersection traverse l'orifice de gonflage (12) du coussin à gaz (10).

11. Procédé selon l'une des revendications 2 à 10, **caractérisé en ce que** la paroi du coussin à gaz (10) est repoussée le long de lignes perpendiculaires à la base (16) et à la plaque (19).

12. Procédé selon l'une des revendications 2 à 11, **caractérisé en ce que**, après avoir repoussé la paroi du coussin à gaz (10) au moyen des lames de pliage (220, 221), la paroi est regroupée en direction de la cavité intérieure de coussin à gaz (10) par des coulisses de pliage (230, 231).

13. Procédé selon la revendication 12, **caractérisé en ce que** la paroi est poussée en direction de la cavité intérieure du coussin à gaz (10) par quatre coulisses de pliage (230, 231), les coulisses de pliage (respectivement 230, 231) se faisant face par paires, et les lames de pliage (220, 221) utilisées étant au nombre de quatre et se faisant face par paires.

14. Procédé selon la revendication 13, **caractérisé en ce que** deux parties de paroi en vis-à-vis sont d'abord poussées vers la cavité intérieure du coussin à gaz (10) au moyen de deux coulisses de pliage en vis-à-vis (230), les lames de pliage (221) situées dans la zone desdites coulisses de pliage (230) étant retirées du coussin à gaz (10), et **en ce que** les parties de parois associées aux coulisses de pliage restantes (231) sont ensuite poussées vers la cavité intérieure du coussin à gaz (10) au moyen desdites coulisses de pliage (231), les lames de pliage (220) situées dans la zone desdites coulisses de pliage (231) étant retirées du coussin à gaz (10).

15. Procédé selon la revendication 14, **caractérisé en ce que**, lorsque les lames de pliage (220, 221) ont été retirées de la cavité intérieure du coussin à gaz (10), celui-ci continu d'être regroupé au moyen des coulisses de pliage (230, 231).

16. Procédé selon l'une des revendications précédentes, **caractérisé en ce que**, pour que le coussin à gaz (10) se déploie entre la base (16) et la plaque (19), la cavité intérieure du coussin à gaz (10) est soumise à une surpression inférieure à 100 000 Pa.

17. Procédé selon la revendication 16, **caractérisé en ce que** la cavité intérieure du coussin à gaz (10) est soumise à une pression d'environ 50 000 Pa.

18. Procédé selon l'une des revendications 2 à 17, **caractérisé en ce que**, le gaz contenu dans la cavité intérieure du coussin à gaz (10) après la mise en pression peut s'échapper lors de la poussée des lames de pliage (20, 21; 120, 121, 122, 123; 220, 221) ou des coulisses de pliage (230, 231).

19. Procédé selon l'une des revendications précédentes, **caractérisé en ce qu'**après le pliage du coussin à gaz (10), une dépression est appliquée à la cavité intérieure de celui-ci.

20. Procédé selon l'une des revendications précédentes, **caractérisé en ce qu'**à l'issue du pliage, le coussin à gaz (10) est fixé en l'état.

21. Procédé selon l'une des revendications précédentes, **caractérisé en ce que**, par rapport à la plaque (19), la base (16) est disposée à une distance (a) qui correspond sensiblement à la hauteur d'emballage du coussin à gaz replié (10).

22. Dispositif pour plier un coussin à gaz, comprenant une base (16) sur laquelle un coussin à gaz (10) à plier peut être étalé, un dispositif de serrage (18) qui permet de fixer le bord (14) de l'orifice de gonflage (12), une plaque (19) qui peut être disposée parallèlement à la base (16) et à une distance (a) de celle-ci, un dispositif (26) pour mettre sous pression la cavité intérieure du coussin à gaz (10) fixé au moyen du dispositif de serrage (18), et plusieurs lames de pliage (20, 21; 120, 121, 122, 123; 220, 221) qui peuvent se déplacer entre une position distante du périmètre du coussin à gaz (10) déployé entre la base (16) et la plaque (19) et une position dans laquelle la paroi du coussin à gaz (10) est repoussée en direction de la cavité intérieure de celui-ci, la distance (a) entre la base (16) et la plaque (19) étant choisie pour que le coussin à gaz déployé entre la base (16) et la plaque (19) ait une forme fortement aplatie.

23. Dispositif selon la revendication 22, **caractérisé en ce que** les lames de pliage (20, 21; 120, 121, 122, 123; 220, 221) peuvent se déplacer en ligne droite.

24. Dispositif selon la revendication 22 ou la revendication 23, **caractérisé en ce que** les lames de pliage (120) peuvent se déplacer parallèlement les unes aux autres sur une partie de leur course.

25. Dispositif selon l'une des revendications 22 à 24, **caractérisé en ce que** les lames de pliage (20, 21; 120, 121, 122, 123; 220, 221) sont espacées les unes des autres de manière régulière.

26. Dispositif selon l'une des revendications 22 à 25, **caractérisé en ce que** les lames de pliage (20, 21) sont divisées en deux groupes, chaque lame de pliage (20) de l'un des groupes étant disposée entre deux lames de pliage voisines (21) de l'autre groupe.

27. Dispositif selon l'une des revendications 22 à 26, **caractérisé en ce que** les lames de pliage (20, 21) sont disposées en étoile.

28. Dispositif selon l'une des revendications 22 à 24, **caractérisé en ce que** les lames de pliage (120, 121, 122, 123) sont disposées en trois groupes lorsque le coussin à gaz est en position déplacée vers la cavité intérieure, deux groupes en vis-à-vis contenant chacun plusieurs lames de pliage (122, 123) dont les plans définis par celles-ci se coupent sur une droite d'intersection, et un groupe situé entre lesdits deux groupes contenant plusieurs lames de pliage (120, 121) qui sont parallèles entre elles.

29. Dispositif selon l'une des revendications 22 à 28, **caractérisé en ce qu'**il est prévu des coulisses de pliage (230, 231) dont un grand côté peut agir sur le coussin à gaz (10) et qui peuvent se déplacer dans une direction perpendiculaire audit grand côté.

30. Dispositif selon la revendication 29, **caractérisé en ce qu'**il est prévu quatre coulisses de pliage (230, 231) qui se font face par paires.

31. Dispositif selon l'une des revendications 22 à 30, **caractérisé en ce que** le dispositif (26) de mise sous pression de la cavité intérieure du coussin à gaz (10) peut appliquer une dépression.

32. Dispositif selon l'une des revendications 22 à 30, **caractérisé en ce que** le dispositif (26) de mise sous pression de la cavité intérieure du coussin à gaz (10) peut appliquer une surpression de l'ordre de 50 000 à 100 000 Pa.

33. Dispositif selon l'une des revendications 22 à 32, **caractérisé en ce que** la distance (a) entre la plaque (16) et la base (19) correspond à la hauteur d'emballage du coussin à gaz (10) à plier.
